# EUROPÄISCHE PATENTANMELDUNG

(11) **EP 4 345 430 A1**
(43) Veröffentlichungstag der Anmeldung: **03.04.2024**
(21) Anmeldenummer: 23198275.2
(22) Anmeldetag: 19.09.2023
(51) Int. Cl.: G01K 1/02, G01K 3/14

(54) **ÜBERWACHEN EINER SCHALTANLAGE**

(30) Priorität: 29.09.2022 DE 102022210307
(71) Anmelder: Siemens Aktiengesellschaft, 80333 München (DE)
(72) Erfinder: Gohlicke, Kay, 04442 Zwenkau (DE); Henkel, Robin, 04109 Leipzig (DE); Ponader, Daniel, 04207 Leipzig (DE)
(74) Vertreter: Siemens Patent Attorneys

(57) **Zusammenfassung**

Die Erfindung betrifft ein Verfahren zum Überwachen einer Schaltanlage (1), insbesondere einer Niederspannungsschaltanlage. Bei dem Verfahren werden mehrere digitale Temperatursensoren (2) in der Schaltanlage (1) angeordnet und zu einem Sensornetzwerk vernetzt. Jedem Temperatursensor (2) werden Begleitdaten zugeordnet, die Objektdaten zu Komponenten der Schaltanlage (1) in einer Umgebung des Temperatursensors (2) und Messdaten des Temperatursensors (2) umfassen. Mit den Temperatursensoren (2) werden Messwerte erfasst und die Messwerte werden ausgewertet, wobei sie wenigstens einmal gemäß einem auf die Begleitdaten bezogenen Kriterium in Gruppen von Temperatursensoren (2) gruppiert werden und die Messwerte der Temperatursensoren (2) jeweils einer Gruppe korreliert werden.

## Beschreibung

Die Erfindung betrifft eine Schaltanlage und ein Verfahren zum Überwachen einer Schaltanlage.

In Schaltanlagen gewinnt die Informationsgewinnung als Grundlage für eine datenbasierte Überwachung und Zustandsbewertung von Schaltanlagenkomponenten zunehmend an Bedeutung. Ein Großteil der Informationen wird dabei sensorisch ermittelt, was zu einem Anstieg der in der Schaltanlage verbauten Sensoren führt. Insbesondere werden Temperatursensoren verwendet, um Temperaturen in der Schaltanlage zu überwachen.

Eine reine Temperaturmessung an einer Komponente einer Schaltanlage gibt einen Messwert als bewertbare Größe an den Anwender beziehungsweise Betreiber oder an ein Überwachungssystem der Schaltanlage zurück. Die Bewertung des Messwertes erfolgt in der Regel auf der Grundlage der Komponente zugewiesener Grenzwerte und/oder Normalwerte. Beispielsweise wird ein Messwert mit festgesetzten, beispielsweise normativ vorgegebenen, Grenzwerten verglichen. Allerdings liefert dies der Regel nur Aussagen zu einem absoluten Grenzbereich der Schaltanlage. Ein vorliegender Messwert zwischen Grenzwerten ermöglicht nur bedingt eine Aussage über einen Zustand der jeweiligen Komponente.

Die Messwerte eines Temperatursensors können auch gespeichert und mit verschiedenen Methoden ausgewertet werden. Die Interpretation der Messwerte obliegt unter Umständen den Erfahrungen des Anwenders beziehungsweise Betreibers der Schaltanlage oder einem Überwachungssystem, welches Temperaturveränderungen gegenüber historischen Daten als mögliche fehlerhafte Zustände erkennt. Die Änderung eines Messwertes gegenüber historischen Messwerten ermöglicht jedoch auch keine sichere Detektion von fehlerhaften Zuständen. Eine zuverlässige Aussage zu einer Belastung oder einer möglichen Fehlfunktion einer Komponente kann dann in der Regel nur durch eine Korrelation von Strom- und Temperaturwerten der Komponente erreicht werden. Beispielsweise wird auf eine Fehlfunktion geschlossen, wenn die Temperatur ohne eine Erhöhung des Stroms ansteigt. Oft liegen Stromwerte über Schutzgeräte oder integrierte Schutzfunktionen vor. Für viele elektromechanische Komponenten einer Schaltanlage wie Sammelschienen, Verbindungsschienen, Kontaktierungs- und Anschlussstellen, liegen jedoch meist keine verwendbaren Strommesswerte vor, so dass eine verwendbare Temperatur-Strom-Korrelation nicht verfügbar ist.

Ein weiteres Problem der Temperaturerfassung in einer Schaltanlage besteht darin, dass für eine Zustandsbewertung relevante Messstellen innerhalb einer Schaltanlage oft nicht oder nur mit einem hohen technischen Aufwand erreichbar sind, was auf die komplexen Strukturen der Schaltanlage und die komplizierten Einbaubedingungen zurückzuführen ist. Daraus resultiert, dass Fehlerfälle nicht direkt sensorisch detektiert werden können.

Insbesondere in Niederspannungsschaltanlagen werden außerdem oft austauschbare Baugruppenmodule, beispielsweise Einschubmodule oder Steckmodule, verbaut. Dies bietet den Vorteil, diese Baugruppenmodule als Verbraucherabzweige schnell und unkompliziert zu entnehmen, zu tauschen oder hinzuzufügen, ohne andere Abzweige in der Schaltanlage abzuschalten. Ein solches System erfordert allerdings eine im Vergleich zur Festeinbautechnik mit fest installierten Gerätebaugruppen aufwändigere Mechanik, da Komponenten eines Baugruppenmoduls oder das gesamte Baugruppenmodul beweglich sein müssen. Die Verbindungen zur Eingangsstromversorgung und der Abgang zum Verbraucher innerhalb eines Baugruppenmoduls werden durch ein Kontaktsystem realisiert. Eine Schwachstelle kann dabei das Kontaktsystem selbst sein. Beim Einbau (Einsetzen) eines Baugruppenmoduls bewegen sich typischerweise elektrische Modulkontakte des Baugruppenmoduls auf feste Gegenkontakte für die Stromverteilung wie Kupferschienen oder -profile. Diese Gegenkontakte verbinden die Modulkontakte üblicherweise mit einem Eingangsverteilschienensystem und mit Abgangsschienen für einen Verbraucher. Sollte dabei eine fehlerhafte Kontaktierung vorliegen, beispielsweise durch Verschmutzung, Bruch einer Kontaktfeder oder Deformation oder Beschädigung einer Kontaktfläche, erhöht sich der Übergangswiderstand zwischen dem betroffenen Modulkontakt und dem Gegenkontakt. Dies wiederum erhöht die thermische Belastung des Kontaktsystems, was in einem Kontaktabbrand resultieren kann. Daher ist oft eine thermische Überwachung des Kontaktsystems erforderlich. Aufgrund der Beweglichkeit und kompakten Einbaubedingungen der Modulkontakte in einem Gehäuse ist jedoch häufig keine direkte Platzierung eines Temperatursensors an der Wirkstelle (potentiellen Fehlerstelle) möglich. Daher werden Temperatursensoren in einem austauschbaren Baugruppenmodul oft an Messstellen angeordnet, die relativ weit von den Wirkstellen entfernt und daher thermisch von den Wirkstellen relativ stark entkoppelt sind, so dass diese Temperatursensoren keine Messwerte für eine zuverlässige Überwachung des Kontaktsystems liefern. Außerdem ist die Anordnung von Temperatursensoren in austauschbaren Baugruppenmodulen mit entsprechenden Auswerteeinheiten sehr aufwändig und kostenintensiv.

Der Erfindung liegt die Aufgabe zugrunde, ein verbessertes Verfahren zum Überwachen einer Schaltanlage, insbesondere einer Niederspannungsschaltanlage, und eine bezüglich ihrer Überwachung verbesserte Schaltanlage, insbesondere Niederspannungsschaltanlage, anzugeben.

Die Aufgabe wird erfindungsgemäß durch ein Verfahren mit den Merkmalen des Anspruchs 1 und durch eine Schaltanlage mit den Merkmalen des Anspruchs 9 gelöst.

Vorteilhafte Ausgestaltungen der Erfindung sind Gegenstand der Unteransprüche.

Bei dem erfindungsgemäßen Verfahren zum Überwachen einer Schaltanlage, insbesondere einer Niederspannungsschaltanlage,
- werden mehrere digitale Temperatursensoren in der Schaltanlage angeordnet und zu einem Sensornetzwerk vernetzt,
- jedem Temperatursensor werden Begleitdaten zugeordnet, die Objektdaten zu Komponenten der Schaltanlage in einer Umgebung des Temperatursensors und Messdaten des Temperatursensors umfassen,
- mit den Temperatursensoren werden Messwerte erfasst und
- die Messwerte werden ausgewertet, wobei sie wenigstens einmal gemäß einem auf die Begleitdaten bezogenen Kriterium in Gruppen von Temperatursensoren gruppiert werden und die Messwerte der Temperatursensoren jeweils einer Gruppe korreliert werden.

Das erfindungsgemäße Verfahren berücksichtigt das oben ausgeführte Problem, dass Messwerte eines einzelnen Temperatursensors in der Regel keine zuverlässigen Rückschlüsse auf Betriebszustände einer Komponente oder mehrerer Komponenten einer Schaltanlage ermöglichen. Erfindungsgemäß werden daher die Messwerte mehrerer Temperatursensoren zueinander in Beziehung gesetzt und ausgewertet. Zu diesem Zweck werden jedem Temperatursensor Begleitdaten zugeordnet, die eine Umgebung des Temperatursensors in der Schaltanlage charakterisierende Objektdaten und Messdaten des Temperatursensors umfassen. Die Begleitdaten werden dazu verwendet, Temperatursensoren anhand geeigneter Kriterien zu gruppieren und die Messwerte der Temperatursensoren jeweils einer Gruppe vergleichend zu bewerten. Beispielsweise umfassen die Gruppen jeweils Temperatursensoren, die an derselben Komponente (z. B. einer Sammelschiene) der Schaltanlage angeordnet sind, oder Temperatursensoren, die an verschiedenen Komponenten desselben oder ähnlichen Typs oder derselben oder ähnlicher Funktion angeordnet sind. Die für die Gruppierung der Temperatursensoren verwendeten Kriterien sind dabei flexibel, so dass die Messwerte der Temperatursensoren hinsichtlich verschiedener Aspekte verglichen und ausgewertet werden können. Mit anderen Worten sieht das erfindungsgemäße Verfahren eine Filterung der Messwerte der Temperatursensoren gemäß flexibel anpassbaren Kriterien vor, um die Messwerte verschiedener Temperatursensoren zueinander in Beziehung zu setzen und auszuwerten.

Insbesondere ermöglicht das erfindungsgemäße Verfahren, "indirekte" Temperaturmessungen geeignet auszuwerten, bei denen Temperatursensoren nicht jeweils an dem Ort angeordnet sind, an dem eine Temperatur eigentlich erfasst werden soll, sondern an einem davon beabstandeten Ort in der Schaltanlage. Um die Messwerte eines einzelnen derartig angeordneten Temperatursensors zu bewerten, müssten die Messwerte des Temperatursensors zu Werten extrapoliert werden, die die tatsächliche Temperatur jeweils an dem Ort angeben, an dem die Temperatur eigentlich erfasst werden soll. Eine derartige Temperaturbestimmung weist jedoch per se eine aus der Extrapolation resultierende Unsicherheit auf. Das erfindungsgemäße Verfahren ermöglicht dagegen, indirekte Temperaturmessungen mehrerer miteinander vergleichbarer, durch ein geeignetes Kriterium ausgewählter, Temperatursensoren auszuwerten, ohne die Messwerte einzelner Temperatursensoren jeweils extrapolieren zu müssen.

Bei einer Ausgestaltung des erfindungsgemäßen Verfahrens umfassen die einem Temperatursensor zugeordneten Objektdaten eine Art, eine Funktion und/oder eine Anordnung von Komponenten der Schaltanlage in einer Umgebung des Temperatursensors. Diese Ausgestaltung des erfindungsgemäßen Verfahrens berücksichtigt, dass die Art, Funktion und/oder Anordnung von Komponenten der Schaltanlage in einer Umgebung eines Temperatursensors wesentliche Aspekte sind, um Messwerte von Temperatursensoren sinnvoll miteinander zu vergleichen und vergleichend auswerten zu können.

Bei einer weiteren Ausgestaltung des erfindungsgemäßen Verfahrens umfassen die einem Temperatursensor zugeordneten Messdaten von dem Temperatursensor erfasste Messwerte und für jeden Messwert einen Zeitpunkt des Erfassens des Messwerts. Diese Ausgestaltung des erfindungsgemäßen Verfahrens berücksichtigt, dass eine zeitliche Abfolge der von einem Temperatursensor erfassten Messwerte wichtige Informationen zu der zeitlichen Entwicklung von Komponenten der Schaltanlage in einer Umgebung des Temperatursensors und/oder des Temperatursensors selbst liefern kann.

Bei einer weiteren Ausgestaltung des erfindungsgemäßen Verfahrens
- umfasst die Schaltanlage wenigstens ein Baugruppenmodul, das eingerichtet ist, im Betrieb der Schaltanlage in eine Aufnahmeeinheit der Schaltanlage eingebaut und aus der Aufnahmeeinheit ausgebaut werden zu können, wobei
- das Baugruppenmodul elektrische Modulkontakte aufweist und die Aufnahmeeinheit elektrische Gegenkontakte aufweist, die bei dem Einbau des Baugruppenmoduls in die Aufnahmeeinheit jeweils mit einem Modulkontakt elektrisch verbunden werden,
   und
- wenigstens ein digitaler Temperatursensor an einem Gegenkontakt der Aufnahmeeinheit oder an einer mit einem Gegenkontakt der Aufnahmeeinheit in thermischem Kontakt stehenden Komponente der Schaltanlage angeordnet wird.

Insbesondere können mehrere digitale Temperatursensoren jeweils an einem Gegenkontakt der Aufnahmeeinheit oder an einer mit einem Gegenkontakt der Aufnahmeeinheit in thermischem Kontakt stehenden Komponente der Schaltanlage angeordnet werden und die Messwerte derart angeordneter Temperatursensoren können korreliert und ausgewertet werden, wenn in die Aufnahmeeinheit ein Baugruppenmodul eingebaut ist.

Wenn die Schaltanlage mehrere Aufnahmeeinheiten aufweist, können ferner Messwerte von Temperatursensoren, die verschiedenen Aufnahmeeinheiten zugeordnet sind, korreliert und ausgewertet werden, wenn in diese Aufnahmeeinheiten jeweils ein Baugruppenmodul eingebaut ist.

Die vorgenannten Ausgestaltungen des erfindungsgemäßen Verfahrens sind insbesondere auf Niederspannungsschaltanlagen gerichtet, in denen austauschbare Baugruppenmodule verwendet werden. Wie oben bereits ausgeführt wurde, ist häufig die Überwachung der Kontaktstellen von Modulkontakten eines austauschbaren Baugruppenmoduls und der Gegenkontakte einer Aufnahmeeinheit, in die das Baugruppenmodul eingebaut wird, wichtig, da diese Kontaktstellen besonders kritisch (fehleranfällig) sind. Wie oben ebenfalls bereits ausgeführt wurde, ist jedoch die Anordnung von Temperatursensoren in einem Baugruppenmodul aus verschiedenen Gründen problematisch: meist ist eine Anordnung von Temperatursensoren direkt an den Modulkontakten nicht möglich, eine Anordnung von Temperatursensoren in dem Baugruppenmodul an von den Modulkontakten entfernten Orten liefert keine zuverlässigen Messwerte, und die Anordnung von Temperatursensoren in dem Baugruppenmodul und die Auswertung der Messwerte dieser Temperatursensoren sind generell aufwändig und kostenintensiv. Die vorgenannten Ausgestaltungen der Erfindung zielen auf eine Lösung dieser Problematik, indem sie zur Überwachung der Kontaktstellen die Anordnung von Temperatursensoren nicht in den austauschbaren Baugruppenmodulen sondern an Gegenkontakten von Aufnahmeeinheiten und/oder an mit Komponenten der Schaltanlage, die jeweils in thermischem Kontakt mit einem Gegenkontakt einer Aufnahmeeinheit stehen, vorsehen. Die mit diesen Temperatursensoren vorgenommenen Temperaturmessungen sind daher indirekte Temperaturmessungen, die erfindungsgemäß ausgewertet werden, indem Messwerte mehrerer derart angeordneter Temperatursensoren, die durch ein geeignetes Kriterium derselben Gruppe von Temperatursensoren zugeordnet werden, vergleichend ausgewertet werden.

Bei einer weiteren Ausgestaltung des erfindungsgemäßen Verfahrens werden die Temperatursensoren durch ein Bussystem zu dem Sensornetzwerk vernetzt und die Messwerte der Temperatursensoren werden mit einer an das Bussystem angeschlossenen Auswerteeinheit ausgewertet.

Gemäß der vorgenannten Ausgestaltung der Erfindung werden also digitale Temperatursensoren zum Überwachen einer Schaltanlage durch ein Bussystem zu einem Sensornetzwerk vernetzt. Gegenüber der Verwendung analoger Temperatursensoren ermöglicht dies, Parallelverdrahtungen der Temperatursensoren zu eliminieren und durch eine Busleitung des Bussystems zu ersetzen. Ferner kann die Anzahl an eine zentrale Auswerteeinheit angebundener Temperatursensoren gegenüber der Verwendung analoger Temperatursensoren stark erhöht werden, was wiederum die Messstellenkosten erheblich reduziert, da die Kosten für die Auswerteeinheit kaum von der Anzahl der Messstellen abhängen. Zudem wird der Einbauaufwand für die Temperatursensoren reduziert und die Temperatursensoren können flexibler integriert werden, um so an schwer zugänglichen Stellen zu messen. Aufgrund der starken Kostenreduktion kann die Messstellenabdeckung erhöht werden, was zu einer verbesserten Grundlage für eine datenbasierte Zustandsanalyse führt.

Bei einer weiteren Ausgestaltung des erfindungsgemäßen Verfahrens werden bei der Auswertung der Messwerte der Temperatursensoren Differenzen von Messwerten der Temperatursensoren jeweils einer gemäß einem Kriterium gebildeten Gruppe bestimmt und verglichen. Diese Ausgestaltung des erfindungsgemäßen Verfahrens berücksichtigt, dass eine erfindungsgemäß gebildete Gruppe von Temperatursensoren in der Regel Temperatursensoren enthält, die an derselben Komponente oder vergleichbaren Komponenten der Schaltanlage angeordnet sind. Daher können Differenzen von Messwerten der Temperatursensoren einer derartigen Gruppe auf Probleme oder Fehler in der Schaltanlage oder auf gestörte Temperatursensoren hindeuten.

Eine erfindungsgemäße Schaltanlage, insbesondere Niederspannungsschaltanlage, umfasst
- ein Sensornetzwerk digitaler Temperatursensoren, wobei jedem Temperatursensor Begleitdaten zugeordnet sind, die Objektdaten zu Komponenten der Schaltanlage in einer Umgebung des Temperatursensors und Messdaten des Temperatursensors umfassen,
- eine Auswerteeinheit, die eingerichtet ist, mit den Temperatursensoren erfasste Messwerte auszuwerten, wobei die Messwerte wenigstens einmal gemäß einem auf die Begleitdaten bezogenen Kriterium in Gruppen von Temperatursensoren gruppiert
werden und die Messwerte der Temperatursensoren jeweils einer Gruppe korreliert werden.

Eine erfindungsgemäße Schaltanlage ermöglicht die Durchführung des erfindungsgemäßen Verfahrens. Daher entsprechen die Vorteile einer derartigen Schaltanlage den oben genannten Vorteilen des erfindungsgemäßen Verfahrens. Dies trifft auch auf die folgenden Ausgestaltungen einer erfindungsgemäßen Schaltanlage zu.

Eine Ausgestaltung einer erfindungsgemäßen Schaltanlage umfasst ein Baugruppenmodul, das eingerichtet ist, im Betrieb der Schaltanlage in eine Aufnahmeeinheit der Schaltanlage eingebaut und aus der Aufnahmeeinheit ausgebaut werden zu können, wobei
- das Baugruppenmodul elektrische Modulkontakte aufweist und die Aufnahmeeinheit elektrische Gegenkontakte aufweist, die bei dem Einbau des Baugruppenmoduls in die Aufnahmeeinheit jeweils mit einem Modulkontakt elektrisch verbunden werden, und
- wenigstens ein digitaler Temperatursensor in der Aufnahmeeinheit an einem Gegenkontakt oder einer mit einem Gegenkontakt der Aufnahmeeinheit in thermischem Kontakt stehenden Komponente der Schaltanlage angeordnet ist.

Insbesondere können mehrere digitale Temperatursensoren in der Aufnahmeeinheit jeweils an einem Gegenkontakt oder einer mit einem Gegenkontakt in thermischem Kontakt stehenden Komponente der Schaltanlage angeordnet sein und die Auswerteeinheit eingerichtet sein, Messwerte in einem Einschubgehäuse angeordneter Temperatursensoren auszuwerten, wobei diese Messwerte korreliert werden.

Ferner kann die Schaltanlage mehrere Aufnahmeeinheiten aufweisen, wobei die Auswerteeinheit eingerichtet ist, Messwerte in verschiedenen Aufnahmeeinheiten angeordneter Temperatursensoren auszuwerten, wobei diese Messwerte korreliert werden.

Bei einer weiteren Ausgestaltung einer erfindungsgemäßen Schaltanlage sind die Temperatursensoren durch ein Bussystem zu dem Sensornetzwerk vernetzt und die Auswerteeinheit ist an das Bussystem angeschlossen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch ein erstes Ausführungsbeispiel einer Schaltanlage,
FIG 2 schematisch ein zweites Ausführungsbeispiel einer Schaltanlage.

Einander entsprechende Teile sind in den Figuren mit denselben Bezugszeichen versehen.

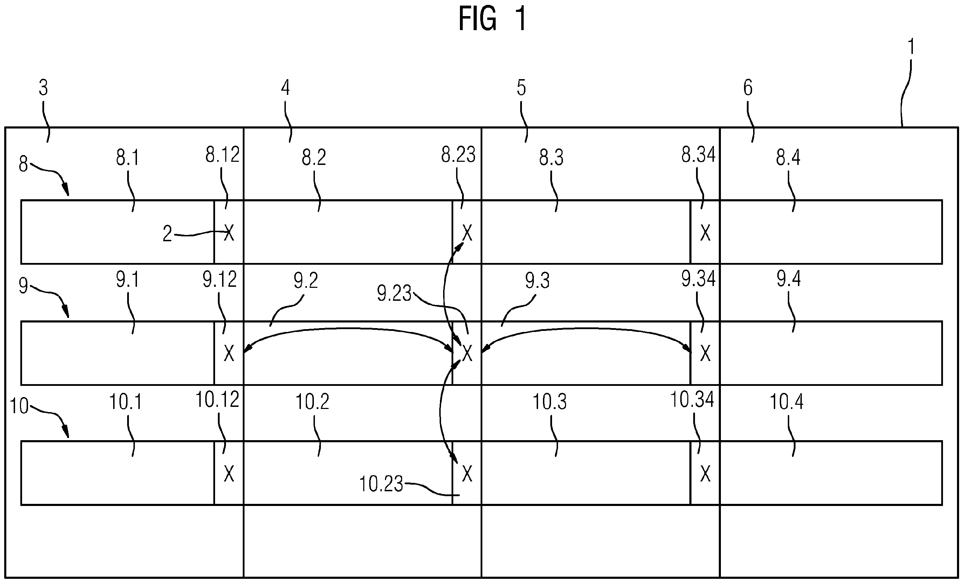

Figur 1 (FIG 1) zeigt schematisch ein erstes Ausführungsbeispiel einer Schaltanlage 1. Die Schaltanlage 1 weist vier Schaltfelder 3 bis 6 und drei Sammelschienen 8, 9 10 auf. Jede Sammelschiene 8, 9, 10 verläuft in allen Schaltfeldern 3 bis 6 und verbindet (nicht dargestellte) Komponenten der Schaltfelder 3 bis 6 elektrisch miteinander.

Die Sammelschiene 8 weist vier Sammelschienenabschnitte 8.1, 8.2, 8.3, 8.4 auf. Der Sammelschienenabschnitt 8.1 verläuft in dem Schaltfeld 3. Der Sammelschienenabschnitt 8.2 verläuft in dem Schaltfeld 3 und in dem Schaltfeld 4. Der Sammelschienenabschnitt 8.3 verläuft in dem Schaltfeld 4 und in dem Schaltfeld 5. Der Sammelschienenabschnitt 8.4 verläuft in dem Schaltfeld 5 und in dem Schaltfeld 6. Die Sammelschienenabschnitte 8.1 und 8.2 sind in dem Schaltfeld 3 in dem Verbindungsbereich 8.12 miteinander verbunden. Die Sammelschienenabschnitte 8.2 und 8.3 sind in dem Schaltfeld 4 in dem Verbindungsbereich 8.23 miteinander verbunden. Die Sammelschienenabschnitte 8.3 und 8.4 sind in dem Schaltfeld 5 in dem Verbindungsbereich 8.34 miteinander verbunden.

Die Sammelschiene 9 weist vier Sammelschienenabschnitte 9.1, 9.2, 9.3, 9.4 auf. Der Sammelschienenabschnitt 9.1 verläuft in dem Schaltfeld 3. Der Sammelschienenabschnitt 9.2 verläuft in dem Schaltfeld 3 und in dem Schaltfeld 4. Der Sammelschienenabschnitt 9.3 verläuft in dem Schaltfeld 4 und in dem Schaltfeld 5. Der Sammelschienenabschnitt 9.4 verläuft in dem Schaltfeld 5 und in dem Schaltfeld 6. Die Sammelschienenabschnitte 9.1 und 9.2 sind in dem Schaltfeld 3 in dem Verbindungsbereich 9.12 miteinander verbunden. Die Sammelschienenabschnitte 9.2 und 9.3 sind in dem Schaltfeld 4 in dem Verbindungsbereich 9.23 miteinander verbunden. Die Sammelschienenabschnitte 9.3 und 9.4 sind in dem Schaltfeld 5 in dem Verbindungsbereich 9.34 miteinander verbunden.

Die Sammelschiene 10 weist vier Sammelschienenabschnitte 10.1, 10.2, 10.3, 10.4 auf. Der Sammelschienenabschnitt 10.1 verläuft in dem Schaltfeld 3. Der Sammelschienenabschnitt 10.2 verläuft in dem Schaltfeld 3 und in dem Schaltfeld 4. Der Sammelschienenabschnitt 10.3 verläuft in dem Schaltfeld 4 und in dem Schaltfeld 5. Der Sammelschienenabschnitt 10.4 verläuft in dem Schaltfeld 5 und in dem Schaltfeld 6. Die Sammelschienenabschnitte 10.1 und 10.2 sind in dem Schaltfeld 3 in dem Verbindungsbereich 10.12 miteinander verbunden. Die Sammelschienenabschnitte 10.2 und 10.3 sind in dem Schaltfeld 4 in dem Verbindungsbereich 10.23 miteinander verbunden. Die Sammelschienenabschnitte 10.3 und 10.4 sind in dem Schaltfeld 5 in dem Verbindungsbereich 10.34 miteinander verbunden.

In jedem Verbindungsbereich 8.12, 8.23, 8.34, 9.12, 9.23, 9.34, 10.12, 10.23, 10.34 zweier Sammelschienen 8, 9, 10 ist ein digitaler Temperatursensor 2 angeordnet, der in Figur 1 durch ein Kreuzsymbol x dargestellt ist und eingerichtet ist, wiederholt eine Temperatur in dem jeweiligen Verbindungsbereich 8.12, 8.23, 8.34, 9.12, 9.23, 9.34, 10.12, 10.23, 10.34 zu erfassen.

Die Temperatursensoren 2 sind zu einem Sensornetzwerk vernetzt, vorzugsweise durch ein in Figur 1 nicht dargestelltes Bussystem, an das eine Auswerteeinheit angeschlossen ist, die eingerichtet ist, die von den Temperatursensoren 2 erfassten Messwerte auszuwerten.

Jedem Temperatursensor 2 sind Begleitdaten zugeordnet, die Objektdaten zu Komponenten der Schaltanlage 1 in einer Umgebung des Temperatursensors 2 und Messdaten des Temperatursensors 2 umfassen. Die in diesem Ausführungsbeispiel einem Temperatursensor 2 zugeordneten Objektdaten umfassen die Sammelschiene 8, 9, 10, an der der Temperatursensor 2 angeordnet ist, das Schaltfeld 3 bis 6, in dem der Temperatursensor 2 angeordnet ist, und den Verbindungsbereich 8.12, 8.23, 8.34, 9.12, 9.23, 9.34, 10.12, 10.23, 10.34, in dem der Temperatursensor 2 angeordnet ist. Die einem Temperatursensor 2 zugeordneten Messdaten umfassen von dem Temperatursensor 2 erfasste Messwerte und für jeden Messwert einen Zeitpunkt des Erfassens des Messwerts.

Die Messwerte werden von der Auswerteeinheit ausgewertet, wobei sie wenigstens einmal gemäß einem auf die Begleitdaten bezogenen Kriterium in Gruppen von Temperatursensoren 2 gruppiert werden und die Messwerte der Temperatursensoren 2 jeweils einer Gruppe korreliert werden.

Beispielsweise werden die Temperatursensoren 2 zunächst gemäß einem ersten Kriterium gruppiert, gemäß dem alle Temperatursensoren 2 einer Gruppe von Temperatursensoren 2 in demselben Schaltfeld 3 bis 6 angeordnet sind. Figur 1 deutet durch vertikal verlaufende, gebogene Doppelpfeilsymbole eine Gruppe derartig gruppierter Temperatursensoren 2 an, die in Schaltfeld 4 angeordnet sind. Dieser Gruppe gehören die in den Verbindungsbereichen 8.23, 9.23 und 10.23 angeordneten Temperatursensoren 2 an.

Bei der Auswertung der Messwerte der Temperatursensoren 2 einer gemäß dem ersten Kriterium gebildeten Gruppe werden beispielsweise die Differenzen der von den Temperatursensoren 2 dieser Gruppe erfassten Messwerte bestimmt und bewertet. Diese Differenzen werden beispielsweise mit einem ersten Differenzschwellenwert verglichen. Wenn für keine dieser Gruppen von Temperatursensoren 2 eine Differenz den ersten Differenzschwellenwert überschreitet, wird darauf geschlossen, dass kein Fehler an den Sammelschienen 8, 9, 10 oder den Temperatursensoren 2 vorliegt. Andernfalls werden die Temperatursensoren 2 beispielsweise anschließend gemäß einem von dem ersten Kriterium verschiedenen zweiten Kriterium gruppiert, und die von den Temperatursensoren 2 erfassten Messwerte werden gruppenweise ausgewertet.

Beispielsweise sind gemäß dem zweiten Kriterium alle Temperatursensoren 2 einer Gruppe von Temperatursensoren 2 an derselben Sammelschiene 8, 9, 10 angeordnet. Figur 1 deutet durch horizontal verlaufende, gebogene Doppelpfeilsymbole eine Gruppe derartig gruppierter Temperatursensoren 2 an, die an der Sammelschiene 9 angeordnet sind. Dieser Gruppe gehören die in den Verbindungsbereichen 9.12, 9.23 und 9.34 angeordneten Temperatursensoren 2 an.

Bei der Auswertung der Messwerte der Temperatursensoren 2 einer gemäß dem zweiten Kriterium gebildeten Gruppe werden beispielsweise wiederum die Differenzen der von den Temperatursensoren 2 dieser Gruppe erfassten Messwerte bestimmt und bewertet. Diese Differenzen werden beispielsweise mit einem zweiten Differenzschwellenwert verglichen.

Nun werden beispielsweise die Ergebnisse der Auswertungen der Messwerte der Temperatursensoren 2 gemäß dem ersten Kriterium und dem zweiten Kriterium zueinander in Beziehung gesetzt. Wenn in der Auswertung der Messwerte der Temperatursensoren 2 gemäß dem ersten Kriterium ein Temperatursensor 2 "auffällig" ist in dem Sinne, dass Differenzen zwischen den Messwerten dieses Temperatursensors 2 und den Messwerten der anderen Temperatursensoren 2, die derselben nach dem ersten Kriterium gebildeten Gruppe wie dieser Temperatursensor 2 angehören, den ersten Differenzschwellenwert überschreiten, wird beispielsweise untersucht, ob dieser Temperatursensor 2 in demselben Sinne auch gemäß dem zweiten Kriterium auffällig ist. Wenn dies der Fall ist, wird darauf geschlossen, dass wahrscheinlich in dem Verbindungsbereich 8.12, 8.23, 8.34, 9.12, 9.23, 9.34, 10.12, 10.23, 10.34, in dem der Temperatursensor 2 angeordnet ist, ein Problem aufgetreten ist oder dieser Temperatursensor 2 gestört ist. Andernfalls wird beispielsweise darauf geschlossen, dass zumindest in dem Verbindungsbereich 8.12, 8.23, 8.34, 9.12, 9.23, 9.34, 10.12, 10.23, 10.34, in dem der Temperatursensor 2 angeordnet ist, kein Problem aufgetreten ist. Die Auffälligkeit des Temperatursensors 2 gemäß dem ersten Kriterium könnte in einem solchen Fall beispielsweise durch eine erhöhte Strombelastung der Sammelschiene 8, 9, 10, in der der Temperatursensor 2 angeordnet ist, gegenüber den anderen Sammelschienen 8, 9, 10 verursacht sein. Dies kann dann weiter analysiert werden, beispielsweise unter Einbeziehung weiterer, in Figur 1 nicht dargestellter Temperatursensoren 2.

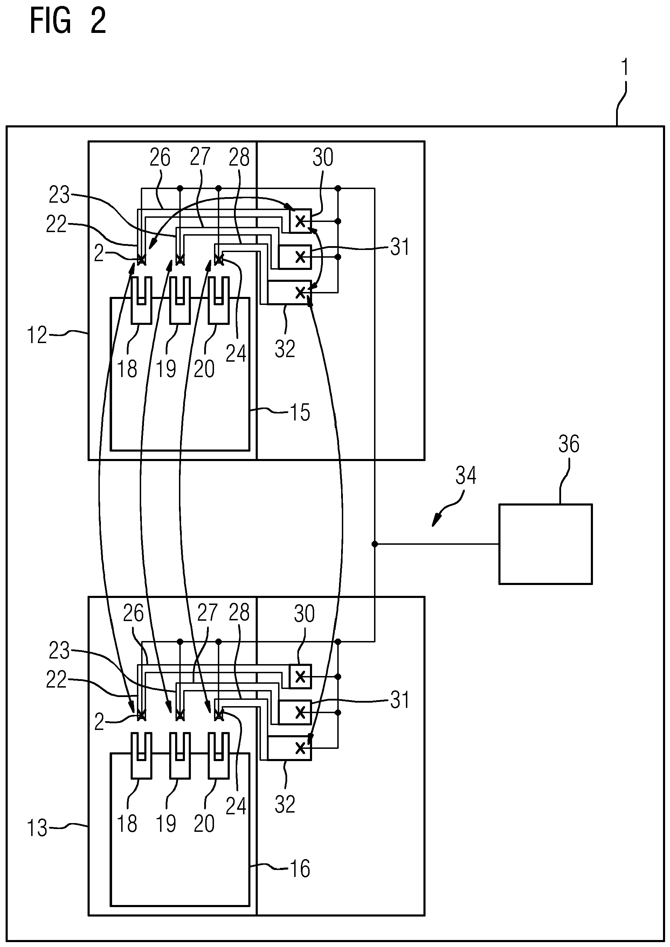

Figur 2 (FIG 2) zeigt schematisch ein zweites Ausführungsbeispiel einer Schaltanlage 1. Die Schaltanlage 1 weist mehrere gleichartige Aufnahmeeinheiten 12, 13 für gleichartige Baugruppenmodule 15, 16 auf, wobei in Figur 2 beispielhaft nur je zwei Aufnahmeeinheiten 12, 13 und Baugruppenmodule 15, 16 dargestellt sind.

Jedes Baugruppenmodul 15, 16 ist eingerichtet, im Betrieb der Schaltanlage 1 in eine Aufnahmeeinheit 12, 13 der Schaltanlage 1 eingebaut und aus der Aufnahmeeinheit 12, 13 ausgebaut werden zu können. Beispielsweise ist jedes Baugruppenmodul 15, 16 ein Einschubmodul und die Aufnahmeeinheiten 12, 13 sind jeweils Einschubgehäuse, in die ein Baugruppenmodul 15, 16 zum Einbau eingeschoben und aus denen das Baugruppenmodul 15, 16 zum Ausbau herausgezogen werden kann. Alternativ ist jedes Baugruppenmodul 15, 16 beispielsweise ein Steckmodul und die Aufnahmeeinheiten 12, 13 sind jeweils Buchsen, in die ein Baugruppenmodul 15, 16 zum Einbau eingesteckt und aus denen das Baugruppenmodul 15, 16 zum Ausbau herausgezogen werden kann.

Jedes Baugruppenmodul 15, 16 weist elektrische Modulkontakte 18, 19, 20 auf und jede Aufnahmeeinheit 12, 13 weist zu den Modulkontakten 18, 19, 20 korrespondierende elektrische Gegenkontakte 22, 23, 24 auf, die bei dem Einbau eines Baugruppenmoduls 15, 16 in die Aufnahmeeinheit 12, 13 jeweils mit einem Modulkontakt 18, 19, 20 elektrisch verbunden werden. Jeder Gegenkontakt 22, 23, 24 ist elektrisch und thermisch über eine elektrische Leitung 26, 27, 28 mit einem Kontaktanschluss 30, 31, 32 verbunden.

An jedem Gegenkontakt 22, 23, 24 und an jedem Kontaktanschluss 30, 31, 32 ist ein digitaler Temperatursensor 2 angeordnet. Wie in Figur 1 sind die Temperatursensoren 2 jeweils durch ein Kreuzsymbol x dargestellt. Die Temperatursensoren 2 sind durch ein Bussystem 34 zu einem Sensornetzwerk vernetzt. An das Bussystem 34 ist eine Auswerteeinheit 36 angeschlossen, die eingerichtet ist, die von den Temperatursensoren 2 erfassten Messwerte auswerten.

Jedem Temperatursensor 2 sind Begleitdaten zugeordnet, die Objektdaten zu Komponenten der Schaltanlage 1 in einer Umgebung des Temperatursensors 2 und Messdaten des Temperatursensors 2 umfassen. Die in diesem Ausführungsbeispiel einem Temperatursensor 2 zugeordneten Objektdaten umfassen die Aufnahmeeinheit 12, 13, der der Temperatursensor 2 zugeordnet ist, und den Modulkontakt 18, 19, 20 oder den Kontaktanschluss 30, 31, 32, an dem der Temperatursensor 2 angeordnet ist. Die einem Temperatursensor 2 zugeordneten Messdaten umfassen von dem Temperatursensor 2 erfasste Messwerte und für jeden Messwert einen Zeitpunkt des Erfassens des Messwerts. Die Messwerte werden von der Auswerteeinheit 36 ausgewertet, wobei die Messwerte wenigstens einmal gemäß einem auf die Begleitdaten bezogenen Kriterium in Gruppen von Temperatursensoren 2 gruppiert werden und die Messwerte der Temperatursensoren 2 jeweils einer Gruppe korreliert werden.

Beispielsweise werden die Temperatursensoren 2 gemäß einem ersten Kriterium in Gruppen gruppiert, die jeweils diejenigen Temperatursensoren 2 enthalten, die an zueinander korrespondierenden Gegenkontakten 22, 23, 24 verschiedener Aufnahmeeinheiten 12, 13 oder zueinander korrespondierenden Kontaktanschlüssen 30, 31, 32 angeordnet sind. Temperatursensoren 2, die derselben Gruppe gemäß einer solchen Gruppierung angehören, sind in Figur 2 durch lange vertikal verlaufende, gebogene Doppelpfeilsymbole angedeutet.

Gemäß einem zweiten Kriterium werden die Temperatursensoren 2 beispielsweise in Gruppen gruppiert, die jeweils Temperatursensoren 2 enthalten, die an einem bestimmten Gegenkontakt 22, 23, 24 oder einem mit diesem Gegenkontakt 22, 23, 24 durch eine Leitung 26, 27, 28 verbundenen Kontaktanschluss 30, 31, 32 angeordnet sind. Ein Beispiel zweier Temperatursensoren 2 einer derartigen Gruppe ist in Figur 2 durch ein im Wesentlichen horizontal verlaufendes, gebogenes Doppelpfeilsymbol angedeutet.

Gemäß einem dritten Kriterium werden die Temperatursensoren 2 beispielsweise in Gruppen gruppiert, die jeweils Temperatursensoren 2 enthalten, die an einem derselben Aufnahmeeinheit 12, 13 zugeordneten Kontaktanschluss 30, 31, angeordnet sind. Ein Beispiel zweier Temperatursensoren 2 einer derartigen Gruppe ist in Figur 2 durch ein kurzes vertikal verlaufendes, gebogenes Doppelpfeilsymbol angedeutet.

Wie in dem anhand von Figur 1 beschriebenen Ausführungsbeispiel werden bei der Auswertung der Messwerte der Temperatursensoren 2 beispielsweise die Differenzen der Messwerte der Temperatursensoren 2 jeweils einer nach einem dieser Kriterien gebildeten Gruppe bestimmt und bewertet, und gegebenenfalls werden die für verschiedene Kriterien erhaltenen Ergebnisse zueinander in Beziehung gesetzt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie sie allein durch die nachfolgenden Patentansprüche definiert ist, zu verlassen.

### Bezugszeichenliste

- 1: Schaltanlage
- 2: Temperatursensor
- 3 bis 6: Schaltfeld
- 8, 9, 10: Sammelschiene
- 8.1 bis 8.4: Sammelschienenabschnitt
- 8.12, 8.23, 8.34: Verbindungsbereich
- 9.1 bis 9.4: Sammelschienenabschnitt
- 9.12, 9.23, 9.34: Verbindungsbereich
- 10.1 bis 10.4: Sammelschienenabschnitt
- 10.12, 10.23, 10.34: Verbindungsbereich
- 12, 13: Aufnahmeeinheit
- 15, 16: Baugruppenmodul
- 18, 19, 20: Modulkontakt
- 22, 23, 24: Gegenkontakt
- 26, 27, 28: elektrische Leitung
- 30, 31, 32: Kontaktanschluss
- 34: Bussystem
- 36: Auswerteeinheit

## Patentansprüche

1. Verfahren zum Überwachen einer Schaltanlage (1), insbesondere einer Niederspannungsschaltanlage, wobei
- mehrere digitale Temperatursensoren (2) in der Schaltanlage (1) angeordnet und zu einem Sensornetzwerk vernetzt werden,
- jedem Temperatursensor (2) Begleitdaten zugeordnet werden, die Objektdaten zu Komponenten der Schaltanlage (1) in einer Umgebung des Temperatursensors (2) und Messdaten des Temperatursensors (2) umfassen,
- mit den Temperatursensoren (2) Messwerte erfasst werden und
- die Messwerte ausgewertet werden, wobei sie wenigstens einmal gemäß einem auf die Begleitdaten bezogenen Kriterium in Gruppen von Temperatursensoren (2) gruppiert werden und die Messwerte der Temperatursensoren (2) jeweils einer Gruppe korreliert werden.

2. Verfahren nach Anspruch 1, wobei die einem Temperatursensor (2) zugeordneten Objektdaten eine Art, eine Funktion und/oder eine Anordnung von Komponenten der Schaltanlage (1) in einer Umgebung des Temperatursensors (2) umfassen.

3. Verfahren nach Anspruch 1 oder 2, wobei die einem Temperatursensor (2) zugeordneten Messdaten von dem Temperatursensor (2) erfasste Messwerte und für jeden Messwert einen Zeitpunkt des Erfassens des Messwerts umfassen.

4. Verfahren nach einem der vorhergehenden Ansprüche, wobei
- die Schaltanlage (1) wenigstens ein Baugruppenmodul (15, 16) umfasst, das eingerichtet ist, im Betrieb der Schaltanlage (1) in eine Aufnahmeeinheit (12, 13) der Schaltanlage (1) eingebaut und aus der Aufnahmeeinheit (12, 13) ausgebaut werden zu können, wobei
- das Baugruppenmodul (15, 16) elektrische Modulkontakte (18, 19, 20) aufweist und die Aufnahmeeinheit (12, 13) elektrische Gegenkontakte (22, 23, 24) aufweist, die bei dem Einbau des Baugruppenmoduls (15, 16) in die Aufnahmeeinheit (12, 13) jeweils mit einem Modulkontakt (18, 19, 20) elektrisch verbunden werden, und
- wenigstens ein digitaler Temperatursensor (2) an einem Gegenkontakt (22, 23, 24) der Aufnahmeeinheit (12, 13) oder an einer mit einem Gegenkontakt (22, 23, 24) in thermischem Kontakt stehenden Komponente der Schaltanlage (1) angeordnet wird.

5. Verfahren nach Anspruch 4, wobei mehrere digitale Temperatursensoren (2) jeweils an einem Gegenkontakt (22, 23, 24) der Aufnahmeeinheit (12, 13) oder an einer mit einem Gegenkontakt (22, 23, 24) der Aufnahmeeinheit (12, 13) in thermischem Kontakt stehenden Komponente der Schaltanlage (1) angeordnet werden und Messwerte derart angeordneter Temperatursensoren (2) korreliert und ausgewertet werden, wenn in die Aufnahmeeinheit (12, 13) ein Baugruppenmodul (15, 16) eingebaut ist.

6. Verfahren nach Anspruch 4 oder 5, wobei die Schaltanlage (1) mehrere Aufnahmeeinheiten (12, 13) aufweist und Messwerte von Temperatursensoren (2), die verschiedenen Aufnahmeeinheiten (12, 13) zugeordnet sind, korreliert und ausgewertet werden, wenn in diese Aufnahmeeinheiten (12, 13) jeweils ein Baugruppenmodul (15, 16) eingebaut ist.

7. Verfahren nach einem der vorhergehenden Ansprüche, wobei die Temperatursensoren (2) durch ein Bussystem (34) zu dem Sensornetzwerk vernetzt werden und die Messwerte der Temperatursensoren (2) mit einer an das Bussystem (34) angeschlossenen Auswerteeinheit (36) ausgewertet werden.

8. Verfahren nach einem der vorhergehenden Ansprüche, wobei bei der Auswertung der Messwerte der Temperatursensoren (2) Differenzen von Messwerten der Temperatursensoren (2) jeweils einer gemäß einem Kriterium gebildeten Gruppe bestimmt und verglichen werden.

9. Schaltanlage (1), insbesondere Niederspannungsschaltanlage, umfassend
- ein Sensornetzwerk digitaler Temperatursensoren (2), wobei jedem Temperatursensor (2) Begleitdaten zugeordnet sind, die Objektdaten zu Komponenten der Schaltanlage (1) in einer Umgebung des Temperatursensors (2) und Messdaten des Temperatursensors (2) umfassen,
- eine Auswerteeinheit (36), die eingerichtet ist, mit den Temperatursensoren (2) erfasste Messwerte auszuwerten, wobei die Messwerte wenigstens einmal gemäß einem auf die Begleitdaten bezogenen Kriterium in Gruppen von Temperatursensoren (2) gruppiert werden und die Messwerte der Temperatursensoren (2) jeweils einer Gruppe korreliert werden.

10. Schaltanlage (1) nach Anspruch 9,
- die ein Baugruppenmodul (15, 16) umfasst, das eingerichtet ist, im Betrieb der Schaltanlage (1) in eine Aufnahmeeinheit (12, 13) der Schaltanlage (1) eingebaut und aus der Aufnahmeeinheit (12, 13) ausgebaut werden zu können, wobei
- das Baugruppenmodul (15, 16) elektrische Modulkontakte (18, 19, 20) aufweist und die Aufnahmeeinheit (12, 13) elektrische Gegenkontakte (22, 23, 24) aufweist, die bei dem Einbau des Baugruppenmoduls (15, 16) in die Aufnahmeeinheit (12, 13) jeweils mit einem Modulkontakt (18, 19, 20) elektrisch verbunden werden, und
- wenigstens ein digitaler Temperatursensor (2) an einem Gegenkontakt (22, 23, 24) der Aufnahmeeinheit (12, 13) oder an einer mit einem Gegenkontakt (22, 23, 24) der Aufnahmeeinheit (12, 13) in thermischem Kontakt stehenden Komponente der Schaltanlage (1) angeordnet ist.

11. Schaltanlage (1) nach Anspruch 10, wobei mehrere digitale Temperatursensoren (2) jeweils an einem Gegenkontakt (22, 23, 24) der Aufnahmeeinheit (12, 13) oder an einer mit einem Gegenkontakt (22, 23, 24) der Aufnahmeeinheit (12, 13) in thermischem Kontakt stehenden Komponente der Schaltanlage (1) angeordnet sind und die Auswerteeinheit (36) eingerichtet ist, Messwerte derart angeordneter Temperatursensoren (2) zu korrelieren und auszuwerten, wenn in die Aufnahmeeinheit (12, 13) ein Baugruppenmodul (15, 16) eingebaut ist.

12. Schaltanlage (1) nach Anspruch 10 oder 11, die mehrere Aufnahmeeinheiten (12, 13) aufweist, wobei die Auswerteeinheit (36) eingerichtet ist, Messwerte von Temperatursensoren (2), die verschiedenen Aufnahmeeinheiten (12, 13) zugeordnet sind, zu korrelieren und auszuwerten, wenn in diese Aufnahmeeinheiten (12, 13) jeweils ein Baugruppenmodul (15, 16) eingebaut ist.

13. Schaltanlage (1) nach einem der Ansprüche 9 bis 12, wobei die Temperatursensoren (2) durch ein Bussystem (34) zu dem Sensornetzwerk vernetzt sind und die Auswerteeinheit (36) an das Bussystem (34) angeschlossen ist.
